# EUROPEAN PATENT APPLICATION

(11) **EP 3 696 235 A1**
(43) Date of publication of application: **19.08.2020**
(21) Application number: 19156905.2
(22) Date of filing: 13.02.2019
(51) Int. Cl.: C08L 77/02

(54) **POLYMER COMPOSITIONS INCLUDING A POLYAMIDE BLEND AND CORRESPONDING FORMATION METHODS AND ARTICLES**

(71) Applicant: Solvay Specialty Polymers USA, LLC., Alpharetta, GA 30005-3914 (US)
(72) Inventor: JEOL, Stéphane, Cumming, GA 30041 (US); McILROY, David, Johns Creek, Georgia 30022 (US); DAVIS, Raleigh L., Duluth, Georgia 30097 (US); GAUTAM, Keshav S., Duluth, Georgia 30097 (US)
(74) Representative: Benvenuti, Federica

(57) **Abstract**

Described herein are polymer compositions including a polyamide blend and glass fibers. The polyamide blends include an aliphatic polyamide and a semi-aromatic polyamide. The aliphatic polyamide is obtained by a ring-opening polymerization. It was surprisingly discovered that the polymer compositions had improved mechanical performance (e.g. tensile and impact performance), relative to corresponding polymer compositions where the aliphatic polyamide is obtained by polycondensation. Due at least in part to the improved mechanical performance, the polymer compositions can be desirably incorporated into mobile electronic devices.

## Description

### FIELD OF THE INVENTION

The invention relates to polymer compositions including a polyamide blend having improved mechanical performance. The invention further relates to methods of making the polymer compositions. Still further, the invention relates to articles incorporating the polymer compositions.

### BACKGROUND OF THE INVENTION

Nowadays, mobile electronic devices such as mobile phones, tablets, laptop computers, watches, and so on, are in widespread use. While progress has been made in making smaller electronic devices, there is more and more demand for higher quality and greater serviceability of these mobile electronic devices. Nowadays, mobile electronic devices are getting thinner and smaller for even more portability and convenience, while at the same time becoming increasingly capable of performing more advanced functions and services, both due to the technological development of the devices and the network systems. This evolution comes with a number of conflicting requirements which are all considered to be important factors for the end customer. For example, the device should be as small and light-weight as possible, which requires smaller (*e.g*. thinner) components. However, such components must still maintain or provide improved mechanical performance to provide to desirable structural integrity.

### DETAILED DESCRIPTION OF THE INVENTION

Described herein are polymer compositions including a polyamide blend and glass fibers. The polyamide blends include an aliphatic polyamide and a semi-aromatic polyamide. The aliphatic polyamide is obtained by a ring-opening polymerization. It was surprisingly discovered that the polymer compositions had improved mechanical performance (*e.g*. tensile and impact performance), relative to corresponding polymer compositions where the aliphatic polyamide is obtained by polycondensation. Due at least in part to the improved mechanical performance, the polymer compositions can be desirably incorporated into mobile electronic devices.

As noted, the polymer compositions, including an aliphatic polyamide obtained from a ring-opening polymerization, have surprisingly improved mechanical performance. Aliphatic polyamides obtained by ring opening polymerization such as PA4 to PA10 are well known to have lower overall tensile properties relative to their polycondensation counterparts, PA4,4 to PA10,10, respectively. For example, glass fiber reinforced PA6 sold under the trade name Technyl® C218 V50 has a tensile strength at break of 220 MPa, a tensile modulus of 14.9 GPa, and a tensile elongation at break of 2.0%. On the other hand, glass fiber reinforced PA66 sold under the trade name Technyl® A218 V50 has a tensile strength at break of 240 MPa, a tensile modulus of 16.2 GPa, and a tensile elongation at break of 2.0%. Surprisingly, when blended with the semi-aromatic polyamides described below, the resulting polymer composition including an aliphatic polyamide obtained by ring-opening polymerization had improved mechanical performance relative to corresponding polymer compositions having an aliphatic polyamide obtained by polycondensation.

### The Polyamide Blend

The polyamide blend includes an aliphatic polyamide, obtained by ring-opening polymerization, and an aromatic polyamide.

In some embodiments, the weight ratio of the aliphatic polyamide to the semi-aromatic polyamide (weight ratio = [weight aliphatic polyamide in polymer composition] / [weight semi-aromatic polyamide in polymer composition]) is from 1 to 5, from 2 to 5, or from 3 to 5. In some embodiments, the concentration of the polymer blend in the polymer composition is from 10 wt.% to 90 wt.%, from 20 wt.% to 90 wt.%, or from 30 wt.% to 90 wt.%. As used herein, weight percent is relative to the total weight of the polymer composition, unless explicated stated otherwise.

Examples of desirable polyamide blends include, but are not limited to, those selected from the group consisting of PA4/MXD4, PA5/MXD5, PA6/MXD6, PA7/MXD7, PA8/MXD8, PA9/MXD9 and PA10/MXD10. Excellent results were obtained with PA6/MXD6, as demonstrated in the Examples.

### The Aliphatic Polyamide

The aliphatic polyamide includes at least 50 mol% of a recurring unit, R_{PA1}. In some embodiments, the aliphatic polyamide includes at least 60 mol%, at least 70 mol%, at least 80 mol%, at least 90 mol%, at least 95 mol%, or at least 99 mol% of the recurring unit R_{PA1}. As used herein, mol% is relative to the total number of recurring units in the polymer, unless explicitly stated otherwise.

Recurring unit R_{PA1} is represented by the following formula: 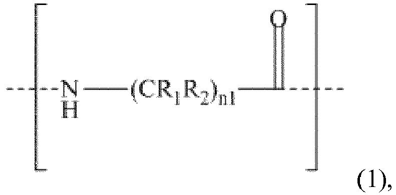 where R₁ and R₂, at each location, are independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and n₁ is an integer from 3 to 9. Preferably n₁ is 4 to 8, more preferably n₁ is 4 or 5, most preferably n₁ is 5. In some embodiments, R₁ and R₂, at each location, is a hydrogen. In some embodiments, the aliphatic polyamide is selected from the group consisting of PA4, PA5, PA6, PA7, PA8, PA9 and PA10. In other embodiments, the aliphatic polyamide is PA5 or PA6, preferably PA6.

In some embodiments, the aliphatic polyamide has an inherent viscosity of from 0.7 deciliters per gram ("dL/g") to 1.4 dL/g, as measured according to ASTM D5336.

As noted above, the aliphatic polyamide is obtained from ring-opening polymerization. Ring-opening polymerization is well known in the art. Generally, the monomer used in the ring-opening polymerization is a lactam monomer represented by the following formula: 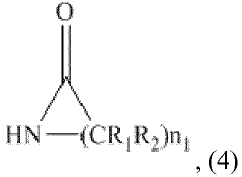 where R₁, R₂ and n₁ are defined in Formula (1), and make explicit the connection between the structure of the lactam monomer and the recurring unit R_{PA1} of the aliphatic polyamide polymer. In some embodiments, the lactam monomer can be a recycled lactam monomer. In such embodiments, the lactam monomer is obtained by depolymerizing a polyamide polymer having a recurring unit R_{PA1}. The resulting lactam monomer can then be polymerized using ring-opening polymerization to form the aliphatic polyamide polymer and, subsequently, can be combined with the other components of the polymer composition to form the final composition, as described in detail below. There are many post-consumer sources of polyamide polymers having a recurring unit R_{PA1} including, but not limited to, fishing nets, fishing line, carpeting, agricultural films, food packaging, furniture, and automotive parts. By using a post-consumer lactam monomer source for the synthesis of the aliphatic polyamide, the resulting polymer compositions are environmentally friendly.

### The Semi-Aromatic Polyamide

The semi-aromatic polyamide includes at least 50 mol% of a recurring unit R_{PA2}. In some embodiments, the aliphatic polyamide includes at least 60 mol%, at least 70 mol%, at least 80 mol%, at least 90 mol%, at least 95 mol%, or at least 99 mol% of the recurring unit R_{PA2}.

Recurring unit R_{PA2} is represented by the following formula: 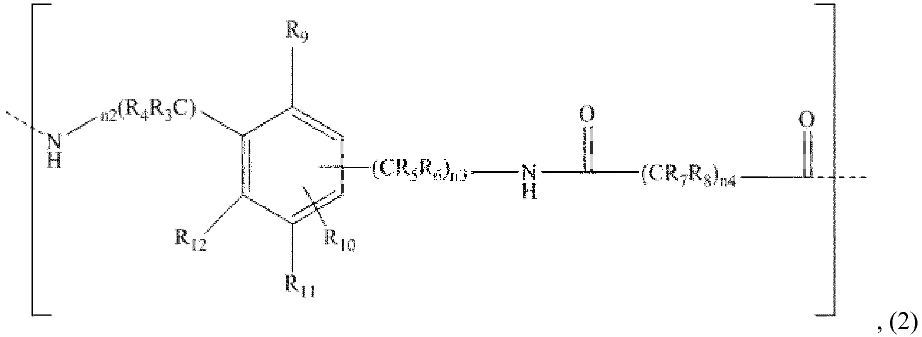 where R₃ to R₈, at each location, and R₉ to R₁₂ are independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; n₄ is an integer from 2 to 8; and n₂ and n₃ are independently selected integers from 1 to 5. In some embodiments, n₂ and n₃ are the same; preferably n₂ and n₃ are both 1. In some embodiments, n₄ = n₁ - 1. Additionally or alternatively, in some embodiments, n₄ is 3 to 7, preferably 3 to 4, most preferably n₄ is 4.

In some embodiments, recurring unit is represented by the following formula:

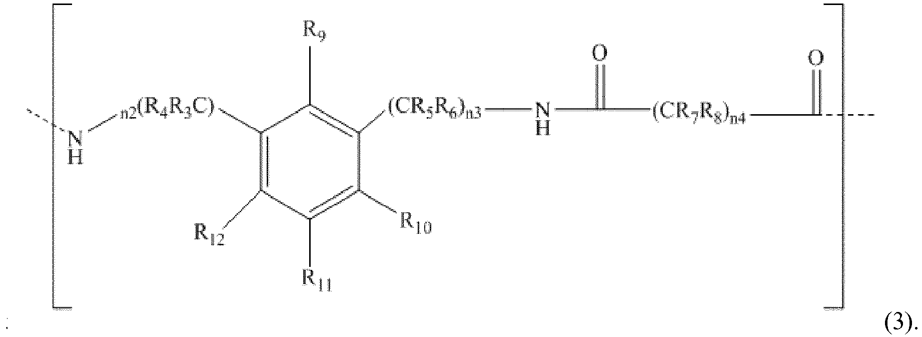

In some embodiments, the semi-aromatic polyamide has an inherent viscosity of from 0.7 deciliters per gram ("dL/g") to 1.4 dL/g, as measured according to ASTM D5336.

### The Polymer Composition

In addition to the polymer blend, the polymer composition includes glass fibers. In some embodiments, the polymer composition can include an additive selected from the group consisting of ultra-violet ("UV") stabilizers, heat stabilizers, pigments, dyes, flame retardants, impact modifiers, and any combination of one or more thereof.

### The Glass Fiber

Glass fibers are silica-based glass compounds that contain several metal oxides which can be tailored to create different types of glass. The main oxide is silica in the form of silica sand; the other oxides such as calcium, sodium and aluminum are incorporated to reduce the melting temperature and impede crystallization. The glass fibers can be added as endless fibers or as chopped glass fibers. The glass fibers have generally an equivalent diameter of 5 to 20 preferably of 5 to 15 µm and more preferably of 5 to 10 µm. All glass fiber types, such as A, C, D, E, M, S, R, T glass fibers (as described in chapter 5.2.3, pages 43-48 of Additives for Plastics Handbook, 2nd ed, John Murphy), or any mixtures thereof or mixtures thereof may be used.

E, R, S and T glass fibers are well known in the art. They are notably described in Fiberglass and Glass Technology, Wallenberger, Frederick T.; Bingham, Paul A. (Eds.), 2010, XIV, chapter 5, pages 197-225. R, S and T glass fibers are composed essentially of oxides of silicon, aluminium and magnesium. In particular, those glass fibers comprise typically from 62-75 wt. % of SiO2, from 16-28 wt. % of Al2O3 and from 5-14 wt. % of MgO. On the other hand, R, S and T glass fibers comprise less than 10 wt. % of CaO.

In some embodiments, the glass fiber is a high modulus glass fiber. High modulus glass fibers have an elastic modulus of at least 76, preferably at least 78, more preferably at least 80, and most preferably at least 82 GPa as measured according to ASTM D2343. Examples of high modulus glass fibers include, but are not limited to, S, R, and T glass fibers. A commercially available source of high modulus glass fibers is S-2 Glass® Rovings Chopped Strands from AGY.

The morphology of the glass fiber is not particularly limited. As noted above, the glass fiber can it can have a circular cross-section ("round glass fiber") or a non-circular cross-section ("flat glass fiber"). Examples of suitable flat glass fibers include, but are not limited to, glass fibers having oval, elliptical and rectangular cross sections. In some embodiments in which the polymer composition includes a flat glass fiber, the flat glass fiber has a cross-sectional longest diameter of at least 15 µm, preferably at least 20 µm, more preferably at least 22 µm, still more preferably at least 25 µm. Additionally or alternatively, in some embodiments, the flat glass fiber has a cross-sectional longest diameter of at most 40 µm, preferably at most 35 µm, more preferably at most 32 µm, still more preferably at most 30 µm. In some embodiments, the flat glass fiber has a cross-sectional diameter was in the range of 15 to 35 µm, preferably of 20 to 30 µm and more preferably of 25 to 29 µm. In some embodiments, the flat glass fiber has a cross-sectional shortest diameter of at least 4 µm, preferably at least 5 µm, more preferably at least 6 µm, still more preferably at least 7 µm. Additionally or alternatively, in some embodiments, the flat glass fiber has a cross-sectional shortest diameter of at most 25 µm, preferably at most 20 µm, more preferably at most 17 µm, still more preferably at most 15 µm. In some embodiments, the flat glass fiber has a cross-sectional shortest diameter was in the range of 5 to 20 preferably of 5 to 15 µm and more preferably of 7 to 11 µm.

In some embodiments, the flat glass fiber has an aspect ratio of at least 2, preferably at least 2.2, more preferably at least 2.4, still more preferably at least 3. The aspect ratio is defined as a ratio of the longest diameter in the cross-section of the glass fiber to the shortest diameter in the same cross-section. Additionally or alternatively, in some embodiments, the flat glass fiber has an aspect ratio of at most 8, preferably at most 6, more preferably of at most 4. In some embodiments, the flat glass fiber has an aspect ratio of from 2 to 6, and preferably, from 2.2 to 4. In some embodiments, in which the glass fiber is a round glass fiber, the glass fiber has an aspect ratio of less than 2, preferably less than 1.5, more preferably less than 1.2, even more preferably less than 1.1, most preferably, less than 1.05. Of course, the person of ordinary skill in the art will understand that regardless of the morphology of the glass fiber (e.g. round or flat), the aspect ratio cannot, by definition, be less than 1.

In some embodiments, the concentration of the glass fiber is at least 10 wt.%, at least 20 wt.% or at least 25 wt.%. Additional or alternatively, in some embodiments, the concentration of the glass fiber is no more than 60 wt.% or no more than 70 wt.%. In some embodiments, the concentration of the glass fiber is from 10 wt.% to 70 wt.%, from 20 wt.% to 70 wt.%, from 25 wt.% to 70 wt.% or from 25 wt.% to 60 wt.%.

### Additives

In some embodiments, in addition to the polymer blend and the glass fiber, the polymer composition further includes an additive selected from the group consisting of ultra-violet ("UV") stabilizers, heat stabilizers, pigments, dyes, flame retardants, halogen free flame retardants, impact modifiers, and any combination of one or more thereof. When present the total concentration of additives is at least 0.5 wt.% or at least 1 wt.%. Additionally or alternatively, in some embodiments, the total concentration of the additives is no more than 20 wt.%, no more than 15 wt.%, no more than 10 wt.%, no more than 5 wt.%, no more 4 wt.% or no more than 3 wt.%. In some embodiments, the total concentration of the additives is from 0.5 wt.% to 20 wt.%, from 0.5 wt.% to 15 wt.%, from 0.5 wt.% to 10 wt.%, from 0.5 wt.% to 5 wt.%, from 1 wt.% to 5 wt. %, from 1 wt.% to 4 wt.% or from 1 wt.% to 3 wt.%.

### Formation of the Polymer Composition

The polyamide polymer blends can be made using methods well known in the art. For example, in one embodiment, the polyamide polymer blends can be made by melt-blending the polymers and the reinforcing agents, optionally any other components or additives.

Any melt-blending method may be used for combining the components of the polymer composition. For example, in one embodiment, all of the polymer composition components (*e.g*. the aliphatic polyamide, the semi-aromatic polyamide, the glass fiber and any optional components) are fed into a melt mixer, such as single screw extruder or twin screw extruder, agitator, single screw or twin screw kneader, or Banbury mixer. The components can be added to the melt mixer all at once or gradually in batches. When the components are gradually added in batches, a part of the components is first added, and then is melt-mixed with the remaining components are subsequently added, until an adequately mixed composition is obtained. If a reinforcing agent presents a long physical shape (for example, a long glass fiber), drawing extrusion molding may be used to prepare a reinforced composition.

### Articles

Due at least in part to its improved mechanical performance, the polymer compositions described here can be desirably integrated into mobile electronic device components.

The term "mobile electronic device" is intended to denote an electronic device that is designed to be conveniently transported and used in various locations. Representative examples of mobile electronic devices may be selected from the group consisting of mobile electronic phones, personal digital assistants, laptop computers, tablet computers, radios, cameras and camera accessories, watches, calculators, music players, global positioning system receivers, portable games, hard drives and other electronic storage devices. Preferred mobile electronic devices include laptop computers, tablet computers, mobile electronic phones and watches.

Components of mobile electronic devices of interest herein include, but are not limited to, fitting parts, snap fit parts, mutually moveable parts, functional elements, operating elements, tracking elements, adjustment elements, carrier elements, frame elements, switches, connectors, cables, housings, and any other structural part other than housings as used in a mobile electronic devices, such as for example speaker parts. Said mobile electronic device components can be notably produced by injection molding, extrusion or other shaping technologies.

A "mobile electronic device housing" refers to one or more of the back cover, front cover, antenna housing, frame and/or backbone of a mobile electronic device. The housing may be a single article or comprise two or more components. A "backbone" refers to a structural component onto which other components of the device, such as electronics, microprocessors, screens, keyboards and keypads, antennas, battery sockets, and the like are mounted. The backbone may be an interior component that is not visible or only partially visible from the exterior of the mobile electronic device. The housing may provide protection for internal components of the device from impact and contamination and/or damage from environmental agents (such as liquids, dust, and the like). Housing components such as covers may also provide substantial or primary structural support for and protection against impact of certain components having exposure to the exterior of the device such as screens and/or antennas.

In a preferred embodiment, the mobile electronic device housing is selected from the group consisting of a mobile phone housing, a tablet housing, a laptop computer housing, a tablet computer housing or a watch housing.

The article such as the mobile electronic device components can be made from the polymer composition using any suitable melt-processing method. For example, formation of the mobile electronic device component includes injection molding or extrusion molding the polymer composition. Injection molding is a preferred method.

### EXAMPLES

The present examples demonstrate the improved mechanical properties of the polymer compositions described herein.

To demonstrate mechanical performance, two samples were tested. The glass fiber was obtained from Nittobo, trade name CSG3PA-820, flat fiber E-glass with nominal cross section of 7 µm × 28 µm. Sample parameters are displayed in Table 1. In the tables, "E" refers to an example and "CE" refers to a counter-example.

**TABLE 1**

| Component | E1 (wt.%) | CE1 (wt.%) |
|---|---|---|
| PA6 | 40 | 0 |
| PA66 | 0 | 40 |
| MXD6 | 10 | 10 |
| Glass Fiber | 50 | 50 |

Tensile modulus, tensile strength, and tensile elongation were measured according to ISO 527-2 using 1 mm/minute test speed and injection molded ISO tensile bars. Un-notched impact resistance was tested according to ISO 180 using 10 injection molded ISO tensile bars. Testing results are displayed in Table 2.

**TABLE 2**

| Component | E1 (wt.%) | CE1 (wt.%) |
|---|---|---|
| Tensile Modulus (GPa) | 17.9 | 17.5 |
| Tensile Strength (MPa) | 257 | 252 |
| Tensile Elongation (%) | 2.1 | 2.0 |
| Un-Notched Impact (kJ/m²) | 72 | 66 |

Referring to Table 2, E1 had improved tensile properties and impact resistance, relative to CE1.

The embodiments above are intended to be illustrative and not limiting. Additional embodiments are within the inventive concepts. In addition, although the present invention is described with reference to particular embodiments, those skilled in the art will recognized that changes can be made in form and detail without departing from the spirit and scope of the invention. Any incorporation by reference of documents above is limited such that no subject matter is incorporated that is contrary to the explicit disclosure herein.

## Claims

1. A mobile electronic device component comprising a polymer composition comprising:
- a polyamide blend comprising
- an aliphatic polyamide having at least 50 mol% of a recurring unit, R_{PA1}, represented by the following formula: 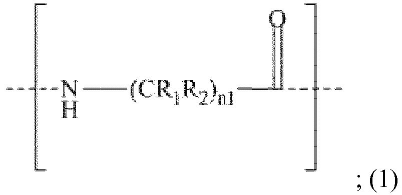
- a semi-aromatic polyamide having at least 50 mol% of a recurring unit, R_{PA2}, represented by the following formula: 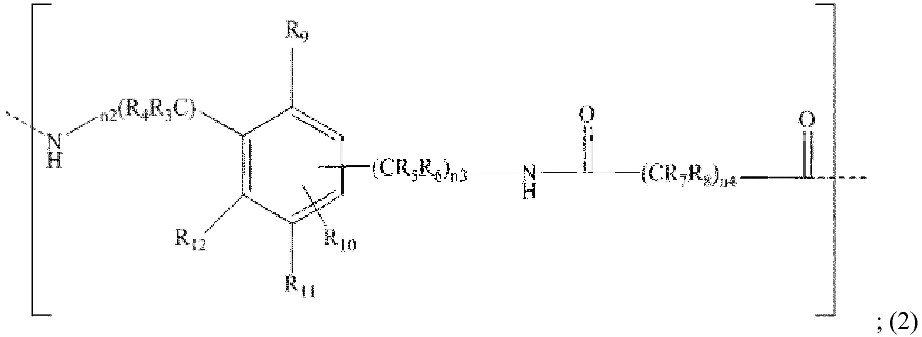 wherein
- R₁ to R₈, at each location, and R₉ to R₁₂ are independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- n₁ is an integer from 3 to 9;
- n₄ is an integer from 2 to 8; and
- n₂ and n₃ are independently selected integers from 1 to 5 and
- glass fiber.

2. The mobile electronic device component of claim 1, wherein R₁ to R₈, at each location, and R₉ to R₁₂ are all hydrogen.

3. The mobile electronic device component of either claim 1 or 2, wherein n₁ is 5, n₄ is 4, or n₁ is 5 and n₄ is 6.

4. The mobile electronic device component of any one of claims 1 to 3, wherein n₂ and n₃ are both 1.

5. The mobile electronic device component of any one of claims 1 to 4, wherein the semi-aromatic polyamide is represented by the following formula:

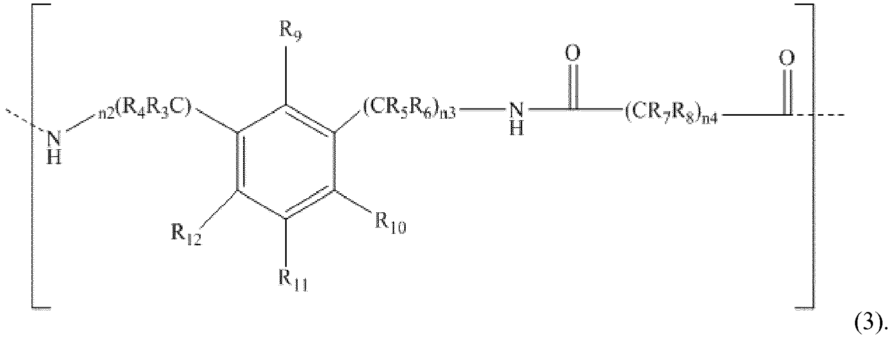

6. The mobile electronic device component of any one of claims 1 to 5, wherein the weight ratio of the aliphatic polyamide to the semi-aromatic polyamide is from 1 to 5, preferably from 2 to 5, most preferably from 3 to 5.

7. The mobile electronic device component of any one of claims 1 to 6, wherein the concentration of the polymer blend is from 10 wt.% to 85 wt.%, relative to the total weight of the polymer composition.

8. The mobile electronic device component of any one of claims 1 to 7, wherein the mobile electronic device component is a mobile electronic device housing.

9. The mobile electronic device component of any one of claims 1 to 8, wherein the concentration of the glass fiber is from 10 wt.% to 70 wt.%, relative to the total weight of the polymer composition.

10. The mobile electronic device component of any one of claims 1 to 9, wherein the polymer composition further comprising pigment or dye.

11. The mobile electronic device component of any one of claims 1 to 10, wherein the polymer composition further comprising a UV stabilizer or a heat stabilizer.

12. The mobile electronic device component of any one of claims 1 to 11, wherein the polymer composition further comprises a halogen-free flame retardant.

13. The mobile electronic device component of any one of claims 1 to 12, wherein the polymer composition further comprises an impact modifier.

14. A method of forming the mobile electronic device component of any one of claims 1 to 13, the method comprising:
- depolymerizing an aliphatic polyamide having a recurring unit R_{PA1} to obtain a monomer represented by the following formula: 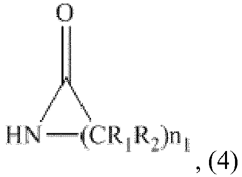
- forming the aliphatic polyamide by polymerizing the monomer; and
- combining the aliphatic polyamide, semi-aromatic polyamide and glass fiber to form the polymer composition.

15. The method of claim 14, wherein an article comprises the aliphatic polyamide and wherein the article is selected from the group consisting of fishing nets, fishing line, carpeting, agricultural films, food packaging, furniture, and automotive parts.
